# EUROPÄISCHE PATENTANMELDUNG

(11) **EP 2 287 519 A2**
(43) Veröffentlichungstag der Anmeldung: **23.02.2011**
(21) Anmeldenummer: 10008609.9
(22) Anmeldetag: 18.08.2010
(51) Int. Cl.: F21K 99/00, F21V 29/00, F21W 131/20, F21W 131/103, F21Y 101/02

(54) **LED-Modul, Verfahren zu dessen Herstellung und LED-Beleuchtungs-Vorrichtung**

(30) Priorität: 19.08.2009 DE 102009037919
(71) Anmelder: Akdogan, Özkan, 95032 Hof (Saale) (DE)
(72) Erfinder: Akdogan, Özkan, 95032 Hof (Saale) (DE)
(74) Vertreter: Wagner, Jutta

(57) **Zusammenfassung**

Die vorliegende Vorrichtung betrifft ein gesteuertes LED-Modul (1) und dessen Herstellung. Das LED-Modul (1) umfasst zumindest eine elektronische Steuervorrichtung (10,10') zum Steuern des LED-Moduls (1), die mit einer Strom-Spannungsquelle (20, 20') koppelbar ist. Das LED-Modul (1) weist eine Leiterplatte (3) auf, auf der eine Mehrzahl an LED-Elementen mit einer LED, die zumindest eine LED-Ummantelung (2) und je ein sich von einer Unterseite des LED-Elements weg erstreckendes Anodenbein (2') und Kathodenbein (2") umfasst, in einer Reihenschaltung auf der Leiterplatte (3), die elektronisch mit der Steuervorrichtung (10,10') gekoppelt ist, über das Anodenbein (2') und das Kathodenbein (2") jeder LED festgelegt sind. Die Leiterplatte (3) ist über einem Leiterplatten-Kühlkörper (6) angeordnet und sie weist an jeder Stelle, an der ein LED-Element positioniert ist, eine Ausnehmung (4) auf, die geeignet ist, zumindest die Unterseite des LED-Elements aufzunehmen, so dass die Unterseite des LED-Elements den Leiterplatten-Kühlkörper (6) vollflächig Wärme abführend kontaktiert. Ferner wird eine Beleuchtungsvorrichtung offenbart, in der eine Mehrzahl der erfindungsgemäßen LED-Module (1) angeordnet ist.

## Beschreibung

Die vorliegende Erfindung betrifft ein gesteuertes LED-Modul und auch seine Fertigung. Das LED-Modul ist geeignet, in eine LED-Beleuchtungsvorrichtung aufgenommen zu werden. Ferner bezieht sich die Erfindung auf eine Vielzahl von Verwendungen für die LED-Beleuchtungsvorrichtung,

LED-Beleuchtungsvorrichtungen, beziehungsweise LED-Leuchtmittel und LED-Module sind aus dem Stand der Technik bekannt. So beschreibt die DE 20 2007 008 258 U1 ein LED-Leuchtmittel, das als "LED-Glühbirne" verwendet werden kann. Dabei soll die Glühbirne weißes Licht mit einem befriedigenden Farbwiedergabeindex von wenigstens 80 Ra erzeugen, um damit ein warmes weißes Licht bereitzustellen. Das dort offenbarte LED-Leuchtmittel weist daher auf einem Sockel mit Netzanschlüssen wenigstens eine monochromatische LED mit Farbkonversionsschicht als weiße LED und wenigstens eine monochromatische LED auf. Damit ergibt das von dem LED-Leuchtmütel emittierte Licht eine Farbtemperatur von höchstens 6.500 Kelvin und einen Farbwiedergabeindex von mindestens 80 Ra. Ferner kann eine Vielzahl von LEDs nach der Chip-on-Board Technologie auf einem LED-Modul angeordnet werden, das aus Keramik oder Metall bestehen kann, um eine thermische Leitfähigkeit aufzuweisen. Ferner kann das LED-Leuchtmittel Kühlrippen zur Wärmeableitung aufweisen, die vorzugsweise um den LED-Treiber angeordnet werden können, der die Elektronik zur gesteuerten und geregelten Strom-/Spannungsversorgung der LEDs darstellt. Ein homogenes Lichtbündel soll durch eine enge Anordnung der LEDs erreicht werden.

Auch die 10 2007 043 355 A1 offenbart ein LED-Modul, LED-Leuchtmittel und eine LED-Leuchte für die energieeffiziente Wiedergabe von weißem Licht. Das dort offenbarte LED-Modul besteht aus elner Anordnung unterschiedlich klassifizierter LEDs, von denen zumindest eine LED, die Phosphor enthält, bezüglich der Phosphorkonzentration so eingesteilt ist, dass deren photometrische Effizienz in Abhängigkeit von der CIE x-Koordinate im Maximum oder nicht mehr als 20 % unter dem Maximum liegt. Damit soll weißes Licht mit einer Farbtemperatur zwischen 2.500 und 8.000 Kelvin stufenlos steuer- oder regelbar sein. Das dort offenbarte LED-Modul soll in ein Standard-Leuchtmittel eingesetzt werden.

Ferner wird in der DE 20 2008 017 219 U1 ein Leuchtdiodenlichtaggregat offenbart, das den Nachteil konventioneller LED-Lichtaggregate überwinden soll. Diese führen Wärme, die von den LED-Lampen produziert wird, ab, Indem die Wärme zum Substrat überführt wird und dann über Wärmeableitungslöcher abgeführt wird. Dabei werden die LED-Lampen durch Konvektion der äußeren Lufthülle abgekühlt. Deshalb ist der Abkühlungseffekt nicht wahrnehmbar und der Wärmeableitungseffekt somit beeinträchtigt. Die verbesserte Wärmeableitung soll durch die Ausgestaltung mittels einer Aluminiumextrusions-Abstrahlbasis und das Klebetrocknen des LED-Moduls auf der Abstrahlbasis geschaffen werden.

Ausgehend von diesem Stand der Technik ist es wünschenswert, ein konstruktiv einfaches, robustes LED-Modul herzustellen, das eine verbesserte Wärmeabstrahlung ermöglicht und dadurch eine längere Lebensdauer erlangen kann.

Ein gesteuertes LED-Modul mit den Merkmalen des Anspruchs 1 stellt die gewünschte Vorrichtung bereit.

Ferner ergibt sich die Aufgabe, eine LED-Beleuchtungsvorrichtung zu schaffen, die geeignet ist, unter Verwendung von Wechsel- oder Gleichstrom homogenes Weißlicht zu schaffen, das in der Lage ist, pro Watt eine Lichtstärke von 100 bis 150 Lumen regelbar bereitzustellen.

Diese Aufgabe wird durch die LED-Beleuchtungsvorrichtung mit den Merkmalen des Anspruchs 16 gelöst.

Es ergibt sich die weitere Aufgabe, ein geeignetes Verfahren zur Schaffung der erfindungsgemäßen LED-Module bereitzustellen.

Diese Aufgabe wird durch das Verfahren mit den Merkmalen des Anspruchs 20 gelöst.

Eine erste Ausführungsform des erfindungsgemäßen gesteuerten LED-Moduls umfasst mehrere LED- Elemente mit einer LED, die eine LED-Ummantelung hat, in der etwa ein Reflektor angeordnet sein kann. Von der Unterseite des LED-Elements erstreckt sich ein Anodenbein und ein Kathodenbein weg, die so auf die Leiterplatte gelötet sind, dass sie mit den dort vorliegenden Leiterabschnitten eine Reihenschaltung bilden, indem das Anodenbein und das Kathodenbein jeder LED über den entsprechenden Leiterabschnitt mit der stromabwärts, beziehungsweise der stromaufwärts liegenden nächsten LED elektronisch verbunden sind. Die Reihe ist über einen entsprechenden Anschluß, der sich von der Leiterplatte nach unten erstrecken kann, elektronisch mit der Steuervorrichtung gekoppelt, über die das Modul ferner verfügt, und die mit einer Strom-/Spannungsquelle koppelbar ist.

Die Leiterplatte ist zur Abführung der erzeugten Wärme mit einem Leiterplattenkühlkörper verbunden, indem sie auf diesem angeordnet ist. Erfindungsgemäß weist nun die Leiterplatte, vielfach als Substrat bezeichnet, an jeder Stelle, an der ein LED-Element positioniert ist, eine Ausnehmung im Leiterplattenmaterial auf, in der die Unterseite des LED-Elements aufgenommen wird. Damit ist es vorteilhaft möglich, dass die Unterseite des LED-Elements den Lederplatten-Kühlkörper vollflächig Wärme abführend kontaktiert.

Zur Verbesserung der Kühlleistung kann vorteilhaft das LED-Element einen separaten LED-Kühlkörper umfassen, der an der Unterseite der LED-Ummantelung angeordnet ist, wobei der Kontakt der Unterseite des LED-Elements mit dem Leiterplatten-KOhlkörper über den LED-Kühlkörper bereitstellt wird. Damit wird erreicht, dass die beiden Kühlkörper, nämlich der unmittelbar der LED zugeordnete Kühlkörper und der Leiterplattenkühlkörper, einander direkt kontaktieren und somit die Wärmeabfuhr optimiert wird.

Um ein stufenlos dimmbares Licht mit Hilfe des gesteuerten LED-Moduls zu erzeugen, ist es vorteilhaft, wenn wenigstens zwölf LED-Elemente, davon jeweils sechs in einer Reihe, auf einem LED-Modul angeordnet sind: Damit wird erfindungsgemäß eine Strom-Spannungskennlinie einer Breite bereitgestellt, die das Nachführen des Stromes erlaubt und die somit erst ein steuerbares und damit auch dimmbares Modul zu schaffen erlaubt.

Ferner weist die elektronische Steuervorrichtung einen Eingang an eine Strom-/Spannungsquelle auf, sowie einen Kondensator, einen Versorgungsspannungsregler sowie einen Gleichstromsteller auf. Der Gleichstromsteller ist vorteilhaft ein DC-DC-LED-Treiber, über den die elektronische Steuervorrichtung mit der Reihenschaltung des LED-Moduls operativ verbunden ist. Der Gleichstromsteller, der in der Steuerungsvorrichtung vorliegt, kann vorteilhaft eine Vorrichtung aufweisen, mit der der Eingangsspannungspegel automatisch erfasst werden kann. Der Gleichstromsteller ist mit dem Versorgungsspannungsregler über einen, vorteilhaft über zwei oder mehrere Widerstände verschaltbar und führt so an dem Gleichstromsteller zu einem stabilen Spannungsknoten.

Einer der Widerstände könnte in einer weiteren Ausführungsform ein Varistor sein, oder ein anderes Element, das es erlaubt, über die Widerstände eine gewünschte Dimmung des Lichts, die mit dem LED-Modul geschaffen wird, herbeizuführen. Die elektronische Steuervorrichtung ist mit der Reihenschaltung des LED-Moduls elektronisch verbunden.

Erfindungsgemäß können Strom-/Spannungsquellen, die Spannungen einer Frequenz in einem Bereich von 0 Hz bis 150.000 Hz bereitstellen, verwendet werden. Ferner kann die Strom-/Spannungsquelle eine Gleichspannung, Rechteckspannung, Sinusspannung oder eine Dreieckspannung bereitstellen, die von der Steuerung verarbeitet wird. Falls am Eingang Wechselspannung anliegt, wird diese gleichgerichtet und mit Hilfe des Kondensators kann auch die Oberwelle geglättet werden.

Durch die Verwendung des Kondensators und einer Dioden-Brückenschaltung am Eingang, wobei sich eine Anordnung von vier Schottky-Dioden als geeignet erwiesen hat, die als schnell reagierende Dioden bis in hohe Frequenzbereichen besonders geeignet sind, ergibt sich der besondere Vorteil der erfindungsgemäßen Anordnung, dass das spannungsgesteuerte LED-Modul mit Hilfe dieser elektronischen Steuervorrichtung in nahezu jedem Frequenzbereicht der anliegenden Versorgungsspannung verwendet werden kann.

So ist es möglich, durch die Verwendung der erfindungsgemäßen Schaltung, die eine verbreiterte Strorn-/Spannungskennlinie bereitstellt, welche die Abhängigleit des LED-Stroms von der angelegten Spannung beschreibt, und die wiederum von der Anzahl der zu steuernden LEDs abhängt, mit einem Modul, das vorteilhaft wenigstens zwölf LEDs hat, eine stufenlos dimmbare Vorrichtung zu schaffen. Durch die verbreiterte Strom-/Spannungskennlinie, beispielsweise im Gleichspannungsbereich zwischen 0 und 24 V, fällt quasi keine nachteilige Blindleistung an. Entsprechend lässt sich in diesem Spannungsbereich auch der Strom einstellen. So ist vorteilhaft das erfindungsgemäße LED-Modul mit der beschriebenen Steuerung dazu geeignet, eine Weißlichtquelle bereitzustellen, die eine Lichtstärke im Bereich von 100 bis 150 Lumen pro Watt erzeugt. Vorteilhaft ergibt sich ferner eine besondere Stabilität der Beleuchtungsvorrichtung durch die Gestaltung des Steuermoduls als spannungsgesteuerte Vorrichtung: Im Unterschied zu bekannten Steuerungen dieser Art, die stromgesteuert Sind, ergibt sich hier bei einem Ausfall einer LED-Reihe oder -kette in der Beleuchtungsvorrichtung nicht, dass der Strom durch die verbliebenen LEDs unkontrolliert ansteigt und zur Zerstörung weiterer LEDs führt; vielmehr wird erfindungsgemäß ein Stromanstieg wegen der Spannungssteuerung verhindert und es erfolgt eine entsprechende Nachführung, die die zu der kaputt gegangenen LED-Reihe parallel geschalteten weiteren LED-Reihen schützt.

Das erfindungsgemäße gesteuerte LED-Modul wird ohne Elektrolyt-Kondensatoten und/ohne Keramik-Chip-Kondensatoren aufgebaut. Bevorzugt werden Polyesterkondensatoren verwendet. Da diese bekannterweise eine hohe Lebensdauer haben, sind mit den erfindungemäßen LED-Modulen Lebensdauern von über 100 000 Stunden erreichbar.

Das erfindungsgemäße gesteuerte LED-Modul kann über die Steuerungsversorgung mit einer Strom-/Spannungsquelle gekoppelt sein, die sowohl eine Batterie, ein Akkumulator, ein öffentliches oder ein Hausstromnetz oder auch eine alternative Stromversorgung sein kann. Alternative Stromversorgungen können über Solarzellen bereitgestellt werden. Der Fachmann weiß, ob die Strom-/Spannungsquelle direkt oder über einen Wechselrichter mit der Vorrichtung gekoppelt werden muss. Das erfindungsgemäße gesteuerte LED-Modul kann wegen seiner verbreiterten I/U-Kennlinie auch als Batterie- bzw. Akkumulator-Ladegerät betrieben werden, um Batterien oder Akkumulatoren über ein Solarpannel aufzuladen. Zum Laden werden die LEDs abgeschaltet und der zu ladende Akkumulator wird an Stelle der LEDs angeschaltet. Damit kann ein kostenaufwändiges spezielles Ladegerät eingespart werden,

Es ist auch möglich, die Dimmung der LEDs durch ein extern angeordnetes Potentiometer vorzunehmen, das entsprechend mit dem Spannungsknoten an dem Gleichstromsteller gekoppelt ist.

Ein weiterer Gegenstand der Erfindung bezieht sich auf eine LED-Beleuchtungsvorrichtung, die mehrere der erfindungsgemäßen gesteuerten LED-Module umfasst, die in einem gemeinsamen Gehäuse angeordnet sind. Damit gelingt es, eine Befeuchtungsvorrichtung bereitzustellen, die, entsprechend ihrer Ausführungsform, etwa in der Lage ist, Weißlicht mit einer Farbtemperatur von etwa 5.500 Kelvin bereitzustellen, so dass die Beleuchtungsvorrichtung im Bereich von Therapieleuchten genauso Einsatz finden kann, wie als Straßenbeleuchtung oder Heimbeleuchtung. Besonders vorteilhaft ergibt sich bei der Verwendung als Straßen- oder Gartenleuchte, dass durch das Weißlicht Insekten nicht angelockt werden, so dass sich hierdurch ein weiterer Aspekt, zuzüglich zu dem geringen Energieverbrauch der Vorrichtung, der Umweltfreundlichkeit ergibt.

Ferner ist es möglich, die erfindungsgemäße LED-Beleuchtungsvomchtung, respektive jedes einzelne der gesteuerten LED-Module, mit einer Vielzahl unterschiedlicher Strom-/Spannungsquellen, von der Batterie über den Akkumulator bis hin zur Solarzelle und zum Stromnetz, zu speisen.

Dadurch wird es ermöglicht, eine Vielzahl von verschiedenartigen Beleuchtungskörpern unter Verwendung der erfindungsgemäßen LED-Module aufzubauen; beispielsweise zur Beleuchtung von Stadien, Flughäfen, Straßen und so weiter, wobei die Energie aus Solarmodulen oder anderen alternativen Stromquellen kommen kann.

Besonders vorteilhaft ergibt sich, dass, da die vorliegende Beleuchtungsvomchtung nur einen geringen Energiebedarf erfordert, dass alternative Energiequellen, wie beispielsweise Sonnenlicht über Solarelemente via Akkumulatoren genutzt werden können. Um etwa Schlechtwettersituationen überbrücken zu können, ist es möglich, zwei oder mehrere Energiequellen alternierend zuzuschalten. So kann etwa die durch ein Solarpanel bereitgestellte Energie genutzt werden, wenn sie in hinreichendem Maß zur Verfügung steht, andernfalls kann auf Netzbetrieb umgeschaltet werden.

In der erfindungsgemäßen LED-Beleuchtungsvorrichtung kann jedes LED-Modul mit einer Einzelsteuerungsvorrichtung gekoppelt sein, ebenso ist es möglich, dass eine Gesamtheit der LED-Module, die in der Beleuchtungsvorrichtung angeordnet sind, für eine gemeinsame elektronische Steuervorrichtung angesteuert wird.

Es können große Lichtflächen geschaffen werden, indem eine Mehrzahl von LED-Modulen, die jeweils mit zwölf LEDs, aufgeteilt in zwei Reihen, bestückt sind, indem diese flächig nebeneinander in einem Gehäuse angeordnet sind.

Ein erfindungsgemäßes Verfahren bezieht sich nunmehr darauf, wie das effektiv kühlbare LED-Modul erfindungsgemäß hergestellt werden kann.

Dabei muss zunächst eine Leiterplatte bereitgestellt werden, in der die Ausnehmungen an den gewünschten Stellen vorzunehmen sind, in denen die LED-Elemente aufgenommen werden sollen. Unter LED-Element kann dabei zwar grundsätzlich eine LED an sich verstanden werden, es kann sich jedoch auch um eine LED mit daran angeordnetem eigenem LED-Kühlkörper handeln.

Nun werden zuerst die LED-Elemente auf bekannte Weise auf der Leiterplatte geordnet, so dass die gewünscht Reihenschaltung auf der Leiterplatte bereitgestellt wird. Der Fachmann weiß, wie er über die Anoden-und Kathodenbeine die Auflötung vornimmt. Wenn die Lötverbindungen hergestellt sind, und ferner die entsprechenden Drähte zur Verbindung des LED-Moduls mit der Steuervorrichtung bereitgestellt und durch ebenfalls vorher vorgesehene Bohrungen durch die Leiterplatte nach unten, in Richtung Kühlkörper durchgeführt worden sind, wird eine spezielle Abpressvorrichtung über den LEDs angeordnet: Hierbei handelt es sich um eine Vorrichtung, die den Eindrücken der LED-Elemente in die Ausnehmungen der Leiterplatte erlaubt, ohne sie zu beschädigen. Das heißt, dass die Vorrichtung entsprechende Ausnehmungen an den Stellen aufweist, in denen die Ummantelung der LED geschützt werden soll, und dass das Abpressen an einem äußersten Rand der LEDs und Ober die Anoden- beziehungsweise Kathodenbeine erfolgt, die beim Eindrücken der LED-Elemente in die Ausnehmungen nach unten nachgeben und dabei quasi einen Knick erhalten. Dieser erweist sich jedoch in der nachfolgenden Benutzung nicht als nachteilig.

Durch diese Vorgehensweise sind die LED-Kühlkörper nunmehr so tief in die Leiterplatte eingebracht, dass bei dem anschließenden Anordnen und Befestigen der Leiterplatte über dem Leiterplattenkühlkörper der gewünschte vollflächige Kontakt der beiden unterschiedlichen Kohlkörperarten hergestellt wird, wodurch die gewünschte Kühlleistung erzielt wird. Nunmehr kann die elektronische Kopplung über die Verbindungsdrähte mit der Steuervorrichtung hergestellt werden.

Diese und weitere Vorteile werden nun aus der nachfolgenden Beschreibung und den begleitenden Figuren offensichtlich. Der Bezug auf die Figuren in der Beschreibung dient dem verbesserten Verständnis des Gegenstands. Gegenstände oder Teile von Gegenständen, die im Wesentlichen gleich oder ähnlich sind, können mit denselben Bezugszeichen versehen sein. Die Figuren sind lediglich schematische Darstellungen von Ausführungsbeispielen der Erfindung. Es zeigt:

**Fig. 1a** eine Draufsicht auf eine Leiterplatte mit erfindungsgemäßen Ausnehmungen,

**Fig. 1b** eine Draufsicht auf die Leiterplatte aus Fig. 1a, mit aufgelöteten LEDs, angeordnet über einem Kühlkörper,

**Fig. 1c** eine Seitenansicht des erfindungsgemäßen LED-Moduls,

**Fig. 1d** eine Seitenschnittansicht einer ersten Fertigungsstufe des erfindungsgemäßen LED-Moduls, mit unmittelbar über den Ausnehmungen aufgelöteten LEDs,

**Fig. 1e** eine Seitenschnittansicht als Momentaufnahme während des Eindrückens der LEDs als Folgesituation auf den in Fig. 1d gezeigten Gegenstand,

**Fig. 1f** eine Seitenschnittansicht des fertig gestellten LED-Moduls nach der in Fig. 1e gezeigten Fertigungssituation,

**Fig. 2** ein Schaltplan einer erfindungsgemäße Beleuchtungsvorrichtung, die fünf LED-Module mit der gemeinsamen Steuerung verwaltet,

**Fig. 3** ein Schaltplan einer erfindungsgemäße Beleuchtungs vorrichtung, die fünf erfindungsgemäße LED-Module mit Einzelsteuerungen verwaltet, wobei die Einzelsteu erungen über zwei alternative Strom-/Spannungsquel len betreibbar sind,

**Fig. 4** einen Schaltplan einer erfindungsgemäßen Steue rungsvorrichtung, die mit einem LED-Modul operativ gekoppelt ist.

Die erfindungsgemäße Vorrichtung betrifft ein gesteuertes LED-Modul, das eine elektronische Steuervorrichtung aufweist, die mit einer Strom-/Spannungsquelle koppelbar ist. Dabei weist das LED-Modul eine Leiterplatte auf, auf der eine Mehrzahl an LED-Elementen mit einer LED, die wenigstens eine LED-Ummantelung und je ein sich von der Unterseite des LED-Elements weg erstreckendes Anodenbein und ein Kathodenbein umfasst, in einer Reihenschaltung auf der Leiterplatte, die elektronisch mit der Steuervorrichtung gekoppelt ist, auf der Leiterplatte befestigt sind, indem die Anoden- und Kathodenbeine mit der LED auf der Leiterplatte festgelötet werden, so dass elektronischer Kontakt zu den benachbarten LEDs hergestellt wird. Unter der Leiterplatte ist ein Leiterplattenkühlkörper angeordnet. An jeder Stelle der Leiterplatte, an der ein LED-Element positioniert ist, ist eine Ausnehmung vorgesehen, die so beschaffen ist, dass sie die Unterseite der LED-Form so aufnimmt, dass diese vollflächig und wärmeabführend auf dem Leiterplattenkühlkörper anliegt. Vorteilhaft ist das LED-Element selbst so gestaltet, dass es nicht nur die LED, sondern einen separaten LED-Kühlkörper umfasst. Dieser ist an der Unterseite der LED-Ummantelung angeordnet, so dass der Kontakt der Unterseite des LED-Elements mit dem Leiterplaftenkühlkörper über den LED-Kühlkörper hergestellt wird.

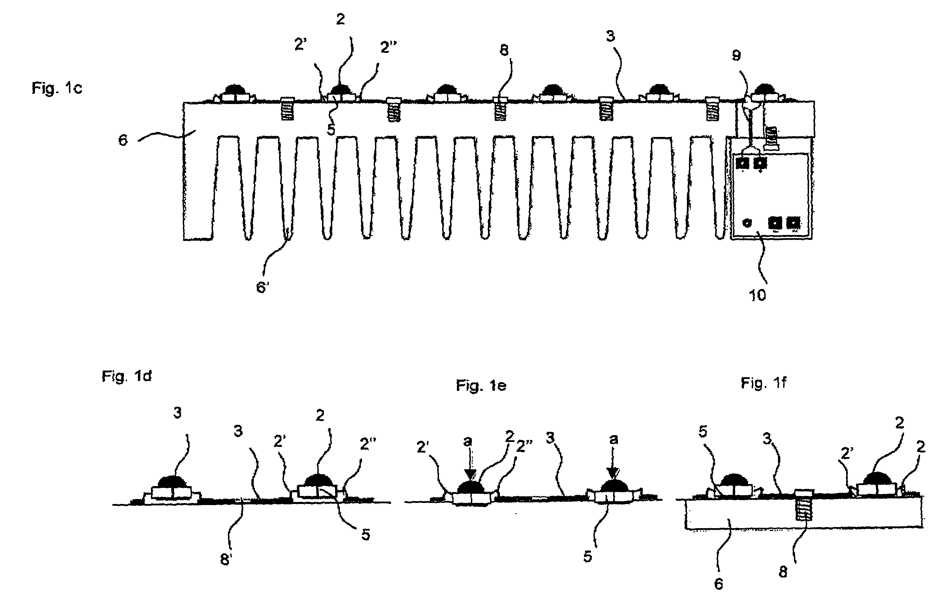

Ein derartiges LED-Element wird in **Fig. 1c** gezeigt: Über dem Leiterplatten-Kühlkörper 6 mit Kühlrippen 6' ist die Leiterplatte 3 angeordnet. Die Leiterplatte 3 ist mittels der Schrauben 8 an dem Kühlkörper 6 festgeschraubt. Der Kühlkörper 6 hat an seiner Berandung eine Ausnehmung, die es erlaubt, die Steuerung 10 in dem Kühlkörper 6 unterzubringen. In der Seitenansicht sind sechs in Reihe gelöteter LEDs mit Ummantelung 2 gezeigt, deren Anodenbeine 2' und Kathodenbeine 2" über entsprechende Verbindungen auf die Leiterplatte 3 gelötet sind und eine Reihenschaltung bilden.

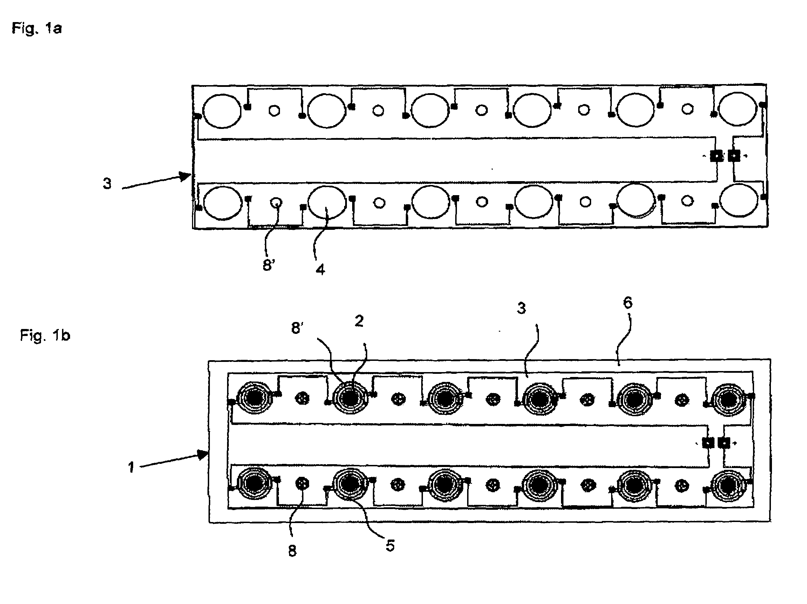

Diese Reihenschaltung wird deutlich aus Fig.1b, die eine Draufsicht auf ein vorteilhaft ausgestaltetes LED-Modul 1 zeigt: Dort sind jeweils 6 LEDs mit Ummantelung 2 eine Reihe bildend auf der Leiterplatte 3 angeordnet, die über dem Kühlkörper 6 positioniert ist. Die Auswahl von wenigstens sechs LEDs 2 in einer Reihe führt dazu, dass bei einer anliegenden Spannung von 1,5 Volt/LED eine Strom-/Spannungskurve entsteht, deren Spektrum breit genug ist, um ein Nachführen des Stroms so zu gestalten, dass mit Hilfe der Steuerung, wie sie in **Fig. 5** gezeigt wird, ein beherrschbar steuerbares und folglich dimmbares LED-Modul geschaffen wird, das Weißlicht liefert.

Erfindungsgemäß wird dabei ein langlebiges und robustes LED-Modul geschaffen, da die Kühlung in der Vorrichtung bessert ist. Die verbesserte Kühlung der Vorrichtung ergibt sich daraus, dass die Leiterplatte 3 an jeder Stelle, an der ein LED-Element mit Ummantelung positioniert wird, eine Ausnehmung aufweist.

Dies wird aus **Fig. 1a** ersichtlich: Dort ist die Leiterplatte 3 in vorbereiteter Struktur zu sehen. Sie weist die Ausnehmungen 4 und auch die Bohrungen 8' für die spätere Aufnahme der Schrauben 8 zur Befestigung der Leiterplatte 3 auf dem Kühlelement 6, siehe **Fig. 1b****,** auf. Dort sind sämtliche erforderlichen Leitungen zur Bereitstellung der Reihenschaltung vorbereitet, wie sie dem Fachmann bekannt sind.

Anders als bei bekannten LED-Modulen, kontaktieren vorliegend die vorgesehenen LED-Kühlkörper 5, wie etwa in **Fig. 1f** und **1c** zu sehen ist, mit ihrer Unterseite vollflächig den Kühlkörper 6, was lediglich dadurch ermöglicht wird, dass die Leiterplatte 3 die entsprechenden Ausnehmungen 4 aufweist.

Erfindungsgemäß wird daher, wie sich in der Abfolge der **Fig. 1a****,** **1d****, 1e und 1f**, wobei die **Fig. 1f und 1c** quasi das Endergebnis der Herstellung zeigen, deutlich wird, das Verfahren zur Herstellung der LED-Module wie folgt ausgeführt:

Die an der Unterseite der LEDs, respektive der LEDs mit Ummantelung 2 angeordneten Kühlkörper 5, kontaktieren unmittelbar den Kühlkörper 6, der mit Kühlrippen 6' zur idealen konvektiven Warmluftabführung gestaltet ist. Dieser Kontakt wird dadurch hergestellt, dass zunächst die Leiterplatte, wie sie in **Fig. 1a** gezeigt ist, vorbereitet wird. Das heißt, es werden die Ausnehmungen 4 auf der ansonsten bereits vorbereiteten Leiterplatte 3 geschaffen. Dann werden die LED-Elemente auf die Leiterplatte gelötet, so dass ihr Anodenbein 2' und ihr Kathodenbein 2" bereits auf der Leiterplatte 3 vorgesehen Leiterabschnitte kontaktieren, und sich daher die gewünschte elektrische Kopplung zur Schaffung der Reihenschaltung ergibt.

**Fig. 1d** zeigt einen Ausschnitt des Gegenstands zu diesem Verfahrensschritt: Wie zu sehen ist, sind die Kühlkörper 5 der LED 2 deutlich beabstandet von einer Unterlage, auf der die Leiterplatte liegt. Wie **Fig. 1e** zeigt, wird nun in Richtung eines Pfeils a Druck auf die festgelöteten LEDs ausgeübt, so dass diese alle zeitgleich in die Ausnehmungen 4 eingedrückt werden. Dabei geben die jeweiligen Anodenbeine 2' und Kathoden 2" nach, sie erhalten, wie **Fig. 1e und f** zeigen, einen leichten Knick. Nunmehr sind die Kühlkörper in die Leiterplatte 3 eingedrückt.

Die Leiterplatte kann über den Leiterplattenkühlkörper 6 angeordnet und mittels der Schrauben 8 befestigt werden. Zuvor ist vorzusehen, dass auch die Verbindungsdrähte 9, die letztlich die Verbindung zu der Steuerung 10 herstellen, siehe **Fig. 1c**, an entsprechender Stelle festgelötet und durch die Leiterplatte nach unten in Richtung der Steuerung, die ebenfalls Platz in dem Kühlkörper 6 findet, geführt werden. Nunmehr können die elektronischen Verbindungen der Verbindungsdrähte 9 zwischen der Leiterplatte 3 und den darauf optimal positionierten LEDs 2 mit Kühlkörpern 5 und der Steuerung 10 hergestellt werden.

Das Eindrücken aller LED-Elemente zeitgleich erfolgt durch die Zuhilfenahme einer entsprechenden Abdrückmaske, die so vorbereitet ist, dass während des Eindrückens die LEDs nicht beschädigt werden. Die Auswölbungen der LEDs können dabei in entsprechenden Vertiefungen der Maske aufgenommen werden, so dass der Druck lediglich über den Rand des Kühlkörpers 5, dessen Durchmesser etwas größer ist als der Durchmesser der Ummantelung 2 der LED, erfolgt.

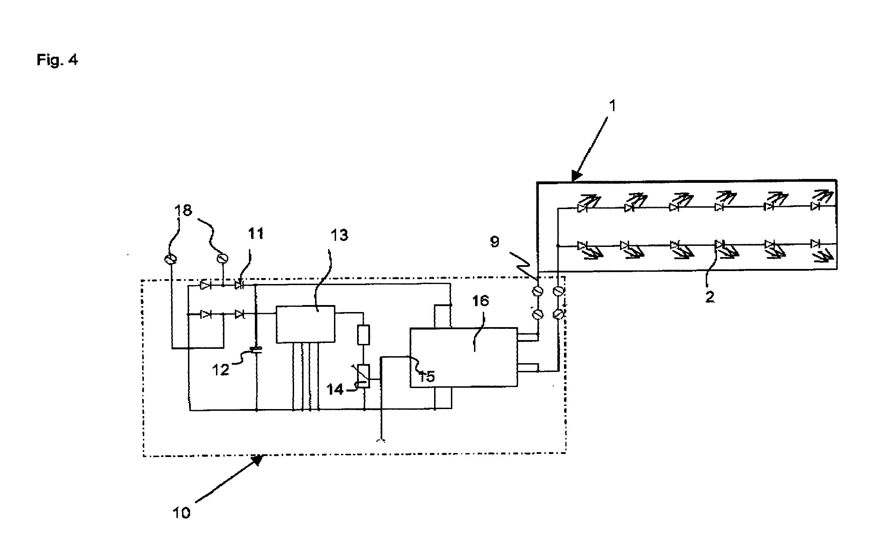

Die zur Steuerung der LED-Module 1 eingesetzte erfindungsgemäße elektronische Steuerungsvorrichtung 10, wie sie in **Fig. 4** in dem strichelierten Kasten gezeigt ist, umfasst einen Eingang 18 an eine Strom-/Spannungsquelle, einen zuschaltbaren Kondensator 12, einen Versorgungsspannungsregler 13, zwei Widerstände 14 und einen Gleichstromsteller 16, der vorliegend als DC-DC-LED-Treiber 16 gestaltet ist. Der Versorgungsspannungsregler 13 wird über die beiden Widerstände 14 mit dem Gleichstromsteller 16 verschaltet und bildet am Eingang in den Gleichstromsteller 16 einen stabilen Spannungsknoten 15. Die elektronische Steuerungsvorrichtung 10 ist mit dem LED-Modul 1 über die Verbindungsdrähte 9 elektronisch gekoppelt.

Am Eingang der in **Fig. 4** gezeigten Ausführungsform der Steuerung liegen vier schnelle Schottky-Dioden 11 in einer Brückenschaltung vor. In Verbindung mit dem Kondensator, der, falls am Eingang Wechselspannung anliegt, die Oberwelle glättet, ergibt sich so ein universell nutzbarer Strom-/Spannungseingang 18. Die anliegende Spannung kann daher sowohl eine Gleichspannung als auch eine Rechteck-, eine Sinus-, eine Dreieck- oder eine Wechselspannung sein. Bei der vorliegenden Gestaltung der Steuerung ist es unerheblich, welcher Art die Spannung ist und welche Spannungsfrequenzen anliegen: Diese können in Frequenzbereichen von 0 Hz bis 150.000 Hz bereitgestellt werden.

Der Versorgungsspannungsregler 13 arbeitet präzise und bildet mit den Widerständen 14, von denen vorliegend der zweite ein Varistor ist und eine Dimmfunktion bereitstellt, einen sehr stabilen Spannungsknoten an dem DC-DC-LED-Treiber 16. Dieser dient quasi als Wandler. Die bei seinem Betrieb erhaltene Strom-Spannungskennlinie führt auf Grund ihrer Breite zu einer Strom-Spannungskennlinienregelung der Vorrichtung.

Die Schaltung kann mit 24 Volt Gleich- oder Wechselspannung betrieben werden und, da sie spannungsgeregelt ist, zu einer stufenlos einstellbaren Lichtintensität des Weißlicht emittierenden LED-Moduls führen.

Damit wird eine effiziente und ökonomische Energieversorgung des LED-Moduls erreicht und durch das bereitgestellte Weißlicht, das, anders als weißes Licht in Leuchtstoffröhren nicht flackert, kann es auf vielfältige Weise eingesetzt werden. Sogar die Verwendung von Beleuchtungsvorrichtungen, wie sie sich durch Anordnungen mehrerer der erfindungsgemäßen Module in einem Gehäuse ergibt, für Lichttherapien, und in jedweder Art von Innenräumen oder zur Außenraumgestaltung denkbar und sinnvoll ist, da die erfindungsgemäßen Beleuchtungsvorrichtungen eine neue und angenehme Lichtqualität bereitstellen, die beim Betrieb mit 24 Volt/Modul und einer Anordnung von etwa 5 LED-Modulen in einer Beleuchtungsvorrichtung zu einer Lichtfarbwärme von 5.500 Kelvin und einer Lichtleistung von 100 bis 150 Lumen bei einer Leistung von 1 Watt ergeben.

Dabei ergibt sich durch die verbesserte Kühlung eine verlängerte Lebensdauer der LEDs bei sehr geringem Energieaufwand.

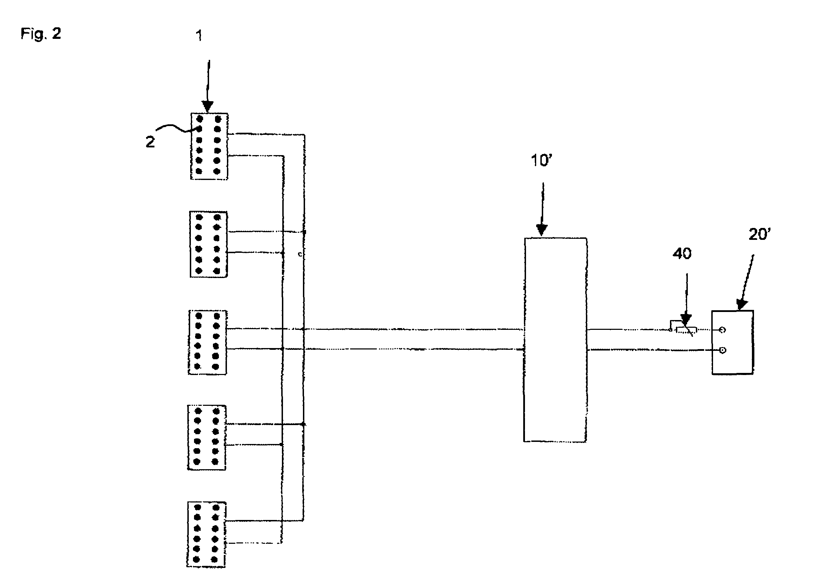

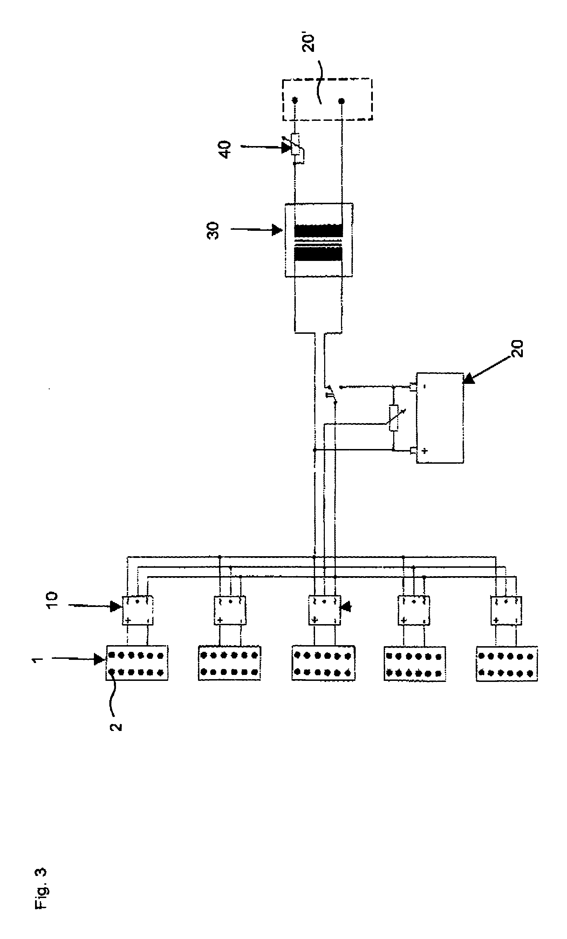

Wie **Fig. 2** **und** **3** zeigen, ist es möglich, eine Anzahl von LED-Modulen, die dort beliebig mit fünf gewählt wurde, über eine gemeinsame elektronische Steuerung 10' zu steuern. Dort wird über eine Netzversorgung 2' eine Netzspannung von 230 Volt bereitgestellt und ein Netzdimmer 40 steht mit der gemeinsamen Steuerung 10' in Kontakt, die die fünf LED-Module 1 ansteuert.

Die alternative Ausführungsform, die in **Fig. 3** gezeigt ist, zeigt zwei alternative Energiequellen: Zum einen kann der Anschluss an ein Stromnetz 20', in dem strichellerten Kasten darstellt, erfolgen, wobei die eingespeisten 230 Volt über den Netzdimmer 40 und den Transformator 30 schlussendlich als eine Gleich- oder Wechselspannung von 24 bis 36 Volt in die mit den Einzelsteuerungen 10 versehenen Module 1 weitergegeben werden. Eine weitere Stromquelle ist der Akkumulator 20, der alternativ zugeschaltet werden kann. Durch die externen Potentiometer 40, respektive durch den Netzdimmer 40, die elektronisch mit den Einzelsteuerungen, deren Spannungsknoten mit dem DC-DC-LED-Treiber verbunden sind, kann ein externes Dimmen erfolgen.

Vorteilhaft können bei der in **Fig. 3** gezeigten Ausführungsform auch alternative Energiequellen zum Einsatz kommen; so kann die mittels eines Solarpanels gewonnene Energie temporär in Beleuchtungsvorrichtungen, wie sie etwa als Straßenlaterne, in der U-Bahn, in Krankenhäusern oder auch als Therapiebeleuchtung eingesetzt werden können, eingespeist werden.

Abhängig von der Gestaltung kann jedes einzelne LED-Modul separat betätigt werden, wodurch sich eine besondere Benutzerfreundlichkeit ergibt, da die Lichtstärke wählbar ist Das angenehme weiße Dauerlicht flackert nicht und ist daher erheblich angenehmer als das Licht von Leuchtstoffröhren oder Sparlampen; es ist ferner stufenlos dimmbar. Durch die Gestaltung des elektrischen Eingangs ist es möglich, jedwede elektrische Energiequelle zu verwenden, wobei insgesamt der Energiebedarf sehr gering ist. Die Farbtemperatur des Lichts mit etwa 5.000 bis 5.500 Kelvin entspricht einer Lichtqualität, wie sie die Sonne aufweist. Damit wird ein angenehmes Weißlicht geschaffen.

### Bezugszeichenliste

- 1: LED-Modul
- 2: LED
- 2',2": Anoden- und Kathodenbein der LED mit Ummantelung 2
- 3: Leiterplatte
- 4: Ausnehmung
- 5: LED-Kühlkörper
- 6: Leiterplatten-Ktihlkörper
- 6': Kühlrippen
- 8,8': Befestigungsmittel, -aufnahme
- 9: Verbindungsdrähte
- 10: Steuerelektronik
- 11: Schottky-Diode
- 12: Kondensator
- 13: Versorgungsspannungsregler
- 14: Widerstand
- 15: Spannungsknoten
- 16: Gleichstromsteller
- 17: Spannungsausgang
- 18: Eingang
- 19: Befestigungsschraube
- 20,20': Gleich- oder einer Wechselstrom- oder Spannungsquelle
- 30: Transformator
- 40: Netzdimmer

## Patentansprüche

1. Gesteuertes LED-Modul (1), umfassend zumindest eine elektronische Steuervorrichtung (10,10') zum Steuern des LED-Moduls (1), die mit einer Strom-Spannungsquelle (20, 20') koppelbar ist,
wobei das LED-Modul (1) eine Leiterplatte (3) aufweist, auf der eine Mehrzahl an LED-Elementen mit einer LED, die zumindest eine LED-Ummantelung (2) und je ein sich von einer Unterseite des LED-Elements weg erstreckendes Anodenbein (2') und Kathodenbein (2") umfasst, in einer Reihenschaltung auf der Leiterplatte (3), die elektronisch mit der Steuervorrichtung (10,10') gekoppelt ist, über das Anodenbein (2') und das Kathodenbein (2") jeder LED festgelegt sind,
und wobei die Leiterplatte (3) über einem Leiterplatten-Kühlkörper (6) angeordnet ist,
**dadurch gekennzeichnet, dass**
die Leiterplatte (3) an jeder Stelle, an der ein LED-Element positioniert ist, eine Ausnehmung (4) aufweist, die geeignet ist, zumindest die Unterseite des LED-Elements aufzunehmen, so dass die Unterseite des LED-Elements den Leiterplatten-Kühlkörper (6) vollflächig Wärme abführend kontaktiert.

2. Gesteuertes LED-Modul (1) nach Anspruch 1, **dadurch gekennzeichnet, dass** das LED-Element einen separaten LED-Kühlkörper (5) umfasst, der an der Unterseite der LED-Ummantelung (2) angeordnet ist, wobei der Kontakt der Unterseite des LED-Elements mit dem Leiterplatten-Kühlkörper (6) über den LED-Kühlkörper (5) bereitstellt wird.

3. Gesteuertes LED-Modul (1) nach Anspruch 1 oder 2, **dadurch gekennzeichnet, dass**
zumindest zwölf LED-Elemente von einem LED-Modul (1) umfasst sind, und/oder dass das LED-Modul (1) ein flächiges Element ist.

4. Gesteuertes LED-Modul (1) nach zumindest einem der Ansprüche 1 bis 3, **dadurch gekennzeichnet, dass**
die elektronische Steuervorrichtung (10,10')
- einen Eingang (18) an eine Strom-/Spannungsquelle (20,20').
- einen zuschaltbaren Kondensator (12),
- einen Versorgungsspannungsregler (13),
- zumindest einen Widerstand (14) und
- einen Gleichstromstelier, insbesondere einen DC-DC-LED-Treiber (16) aufweist,
wobei der Versorgungsspannungsregler (13) über den zumindest einen Widerstand (14) mit dem Gleichstromsteher verschaltbar ist und einen stabilen Spannungsknoten (15) bildet, und wobei
- die elektronische Steuervorrichtung (10,10') mit der Reihenschaltung des LED-Moduls (1) elektronisch gekoppelt ist.

5. Gesteuertes LED-Modul (1) nach Anspruch 4, **dadurch gekennzeichnet, dass** die elektronische Steuervorrichtung (10,10') an dem Eingang (18) zu der Strom-/Spannungsquelle (20,20') eine Mehrzahl von Schottky-Dioden (11), insbesondere vier Schottky-Dioden (11), aufweist und/oder
dass zumindest einer der Widerstände (14), der zwischen dem Versorgungsspannungsregler (13) und dem Gleichstromsteller zuschaltbar ist, ein Varistor ist.

6. Gesteuertes LED-Modul (1) nach zumindest einem der Ansprüche 4 oder 5, **dadurch gekennzeichnet, dass** die Strom-/Spannungsquelle (20,20')
- einen Strom mit einer Frequenz in einem Bereich von 50 bis 150.000 Hz liefert und/oder
- eine Spannung, die eine Gleichspannung, eine Rechteckspannung, eine Sinusspannung oder eine Dreieckspannung ist, bereitstellt.

7. Gesteuertes LED-Modul (1) nach zumindest einem der Ansprüche 4 bis 6, **dadurch gekennzeichnet, dass**
der Gleichstromsteller, insbesondere der DC-DC-LED-Treiber (16), eine Vorrichtung zur Erfassung eines Eingangsspannungspegels in den Gleichstromsteller, insbesondere in den DC-DC-LED-Treiber (16), aufweist und/oder dass der Gleichstromsteller, insbesondere der DC-DC-LED-Treiber (16), eine Strom-Spannungskennlinie mit einer Breite von zumindest 9 V aufweist, so dass das LED-Modul (1) stufenlos dimmbares weißes Dauerlicht bereitstellt.

8. Gesteuertes LED-Modul (1) nach zumindest einem der Ansprüche 1 bis 7, **dadurch gekennzeichnet, dass** der Eingang der Steuerungsvorrichtung mit zumindest einer Strom-/Spannungsquelle (20,20') aus der Gruppe umfassend: eine Batterie, einen Akkumulator (20), ein Stromnetz (20'), eine alternative Stromversorgung, insbesondere eine Solarzelle, direkt oder Ober einen Wechselrichter, insbesondere über einen Transformator (30), gekoppelt ist und /oder dass zumindest zwei der Strom-/Spanriungsquellen alternierend zuschaltbar sind.

9. Gesteuertes LED-Modul (1) nach Anspruch 7 oder 8, **dadurch gekennzeichnet, dass** ein externes Potentiometer (40), insbesondere ein Netzdimmer bei Verwendung des Stromnetzes eine Dimmung an dem Spannungsknoten (15), der durch die Widerstände (14) an dem Gleichstromsteller gebildet wird, bereitstellt

10. LED-Beleuchtungsvorrichtung, umfassend eine Mehrzahl der gesteuerten LED-Module (1) nach zumindest einem der Ansprüche 1 bis 9, die in einem gemeinsamen Gehäuse angeordnet sind und/oder dass jedem LED-Modul (1) in der LED-Beleuchtungsvorrichtung eine elektronische Einzelsteuervorrichtung (10) zugeordnet ist und/oder einer Gesamtheit der LED-Module (1) in der LED-Beleuchtungsvorrichtung eine gemeinsame elektronische Steuervorrichtung (10') zugeordnet ist und/oder die Mehrzahl an LED-Modulen (1) flächig nebeneinander In dem Gehäuse angeordnet ist.

11. Verfahren zur Herstellung eines LED-Moduls(1) zur Verwendung in einer Beleuchtungsvorrichtung nach einem der Ansprüche 1 bis 9, umfassend die Schritte
- Bereitstellen einer Leiterplatte (3) und Fertigen von Ausnehmungen (4), die geeignet sind, zumindest die Unterseite des LED-Elements aufzunehmen,
- Auflöten der Mehrzahl an LED-Elementen mit einer LED, die zumindest eine LED-Ummantelung (2) und je ein sich von einer Unterseite des LED-Elements weg erstreckendes Anodenbein (2') und Kathodenbein (2") umfasst, auf die Leiterplatte (3) und Bilden einer Reihenschaltung auf der Leiterplatte (3), über das Anodenbein (2') und das Kathodenbein (2") und
- Löten von Verbindungsdrähten zur Bereitstellung der elektronischen Kopplung mit der Steuervorrichtung (10,10') und nach unten in Richtung des Leiterplatten-Kühlkörpers (6) durchführen
- Anordnen einer Abpressvorrichtung, die Auswölbungen aufweist, die mit den Außenkonturen der LED-Elemente korrespondieren und
- Eindrücken aller LED-Elemente zeitgleich in die Ausnehmungen (4) wobei das Anodenbein und das Kathodenbein nach unten nachgeben,
- Anordnen und Befestigen der Leiterplatte (3) über dem Leiterplatten-Kühlkörper (6), und
- Bereitstellung der elektronischen Kopplung über die Verbindungsdrähte mit der Steuervorrichtung (10,10').

12. Verwendung einer LED-Beleuchtungsvorrichtung nach Anspruch 10 als eine Therapieleuchte, als eine Raum- oder als eine Straßenleuchte.
